# EUROPEAN PATENT SPECIFICATION

(11) **EP 3 295 836 B1**
(45) Date of publication and mention of the grant of the patent: **24.07.2019**
(21) Application number: 17188598.1
(22) Date of filing: 30.08.2017
(51) Int. Cl.: A47J 19/02, A47J 19/06

(54) **JUICER**
ENTSAFTER
CENTRIFUGEUSE

(30) Priority: 14.09.2016 CN 201610822658; 27.09.2016 WO PCT/CN2016/100442; 21.07.2017 US 201715656421
(43) Date of publication of application: 21.03.2018
(73) Proprietor: Shanghai Aiwei Electronic Technology Co., Ltd., Shanghai (CN)
(72) Inventor: CHEN, Xiuxing, Shanghai (CN); LIU, Yitong, Shanghai (CN); YANG, Zechen, Shanghai (CN)
(74) Representative: Boult Wade Tennant LLP

(56) References cited:
- WO-A1-2016/019820
- WO-A1-2016/161827

## Description

### FIELD OF THE INVENTION

The present invention relates to the technical field of juicing, in particular to a juicer.

### BACKGROUND

With advancement in living standards, more people want to have healthy diet, and want to obtain necessary nutrients from their diet. However, for people who have unbalanced diet and are poor in body function, this issue can be effectively remedied by drinking squeezed juice. As a common device for squeezing food, juicers are always a key concern of people.

Currently, due to a market demand, there are various juicers on the market, which are mainly divided into the following types: 1. centrifugal juicers, which cut food into small pieces using blades that rotate at high speeds, and separate, through a filter screen, particles from juice by centrifugal force; 2. grinding-type juicers, which crush food by spiral drills and then extract juice by using a filter; and 3. squeezing-type juicers, which extract juice by squeezing food. However, the centrifugal juicers are very noisy and are difficult to work for a long time; the grinding-type juicers have poor efficiency and are time-consuming in juicing; and the squeezing-type juicers have a too low juice extraction rate with too much juice residue. Moreover, for most of the juicers, cleaning after use is very troublesome, which increases burden on their users.

In conclusion, the existing juicers on the market have a problem of failing to provide a combination of high-speed juicing, high juice extraction rate, small noise, no cleaning requirement, and long-time work.

WO2016/019820A1 describes a squeeze type juice extractor, comprising a machine body, wherein an inclined plate is fixed in the machine body; an inclined low end of the inclined plate corresponds to a side face of the machine body to form a juice outlet mouth; a squeeze block which slides up and down is provided above the inclined plate; a squeeze space in which a squeezed food is placed is formed between the squeeze block and the inclined plate; a squeeze drive device is mounted below the inclined plate; and the squeeze drive device is in a drive connection with the squeeze block, so that the squeeze block squeezes and slides towards the direction of the inclined plate, squeezing the squeezed food in the squeeze space to produce juice, and then the juice flows out along the juice outlet mouth. The squeeze type juice extractor has a simple and rational structure, uses a mechanical, purely physical direct squeeze, has a large squeezing force, has a short squeezing time and will not generate foam and heat, thereby preserving nutrient components of a foodstuff to the maximum extent.

WO2016/161827A1 describes a fruit/vegetable juicer requiring no core-removal or cleaning. The juicer comprises: a support frame, a lower horizontal member, a movable horizontal member, an upper horizontal member, a flow guiding bag, a filtering bag disposed within the flow guiding bag, and a driving device. The movable horizontal member can move up and down between the upper horizontal member and the lower horizontal member. The space between a bottom surface of the upper horizontal member and an upper surface of the movable horizontal member is a compression chamber. A flow guiding opening is provided at an end of the flow guiding bag. The filtering bag and the flow guiding bag are disposed within the compression chamber. The flow guiding opening located at the end of the flow guiding bag is led to the outside of the compression chamber. At least one of the bottom surface of the upper horizontal member and the upper surface of the movable horizontal member is provided with a buffering pad thereon. The fruit/vegetable juicer can juice fruits/vegetables quickly and has a high extraction rate. In addition, the juice does not directly contact the body of the juicer, thus preventing the juice from being tainted by other odors. Additionally, the juicer does not require cleaning, thus having better hygiene and safety.

### SUMMARY OF THE INVENTION

In view of the above problems in existing technologies, this invention provides a juicer including a fixed plate and an up/down propulsion assembly for juicing, so that the working time of the juicer is longer. Moreover, the juicer includes a motor driver and therefore, it is more efficient and has a greater driving force. Consequently, juice is extracted more thoroughly. The juicer also includes a juicing bag, for the purpose of requiring no cleaning.

A specific technical solution is as follows:
A juicer comprises a frame, an actuator, a hanging rack, and a juicing bag. The frame is a hollow frame formed by four plates which can be detachably assembled. An inner wall of the hollow interior of the frame is arranged as a mounting surface. A surface of the hollow interior of the frame directly facing the mounting surface is a fixed surface. The actuator is detachably attached on the mounting surface. The actuator can reciprocate linearly between the mounting surface and the fixed surface. The juicing bag is arranged to hang from the hanging rack between the actuator and the fixed surface.

The actuator comprises stationary parts, moving parts, a driving rod, action blocks and a driver. The stationary parts and the moving parts are both symmetrically arranged. An end of a moving part is hinged between two stationary parts via a long shaft pin. The driving rod and the action blocks are arranged between the symmetrically arranged moving parts. And the action block is hinged, via a short shaft pin, to an end of the moving part backing to the end to which the stationary part is connected. The driving rod passes through the action blocks to be connected with the driver.

In the juicer described above, each stationary part is arranged to have a U shape, and two moving parts are symmetrically arranged on both sides of the stationary part.

In the juicer described above, the driving rod is a threaded rod, and one action block distant from the driver includes a threaded hole matching the driving rod.

In the juicer described above, an end of a moving part that is connected to a stationary part has a gear structure with a fan shape, and the gear structures of two symmetrically arranged moving parts on the same side of a same stationary part mesh with each other.

In the juicer described above, each moving part includes a connecting rod that can amplify force generated by the driver.

In the juicer described above, an action block close to the driver is associated with a bearing block, the bearing block is fixed on the action block and at the same time, hinged to a moving part via a short shaft pin.

In the juicer described above, two ends of a plate of the frame facing the mounting surface are hinged to the frame via shaft pins.

In the juicer described above, a transmission is provided between the driver and the driving rod.

In the juicer described above, the driver is a motor.

In the juicer described above, one of the stationary parts of the actuator is detachably attached on a mounting plate, and the other stationary part is associated with a propulsion plate.

In the juicer described above, the long shaft pins and the short shaft pins are associated with gaskets and clamping rings.

Advantageous effects of the above described technical solution include: 1. As the juicer uses a fixed plate and an actuator for juicing, its operation is convenient and noise is low; 2. up-and-down movement of a structure including a threaded rod and action blocks is used for juicing, so that repeatability is higher and working time is longer; 3. a motor is used for driving and a transmission is also used to work together with the driver, lifting force is increases and action is accelerated, and consequently juicing efficiency is improved and juice extraction rate is increased; and 4. a juicing bag is used, so that juice does not sputter onto components of the juicer and therefore, the juicer requires no cleaning.

The above described juicer comprises a hollow frame which is fixedly arranged, an actuator arranged in the hollow interior of the frame, and a juicing bag arranged between the hollow interior of the frame and the actuator. The structural design is reasonable and the layout is compact. A mounting surface is arranged in the frame, and a surface facing the mounting surface within the frame is a fixed surface. An actuator is attached on the mounting surface. A propulsion plate is provided on one side of the actuator distant from the mounting surface. The actuator drives the propulsion plate to reciprocate linearly between the mounting surface and the fixed surface. Consequently, food placed between the propulsion plate and the fixed surface is continuously squeezed to execute juicing. Noise is small. Also, a motor used for driving and a transmission increases driving force of the actuator. Juice is squeezed out more thoroughly and juicing efficiency is higher. With a combination of a threaded rod and action blocks, actions can be generated quickly, the reciprocating performance is high, and the working time is efficiently prolonged. Because a juicing bag is arranged between the actuator and the fixed surface, the juice squeezed out does not sputter onto components of the juicer, which achieves the objective of requiring no cleaning.

### BRIEF DESCRIPTION OF THE DRAWINGS

FIG. 1 is a structural diagram of a juicer, according to an embodiment of the invention.
FIG. 2 is a structural diagram of a frame, according to a preferred embodiment of the invention.
FIG. 3 is a structural diagram of an actuator, according to a preferred embodiment of the invention.
FIG. 4 is another structural diagram of the actuator, according to a preferred embodiment of the invention.
FIG. 5A shows a front view of a juicing bag, according to a preferred embodiment of the invention.
FIG. 5B shows a side cross-sectional view of the juicing bag of FIG. 5A, according to a preferred embodiment of the invention.
FIG. 6A shows the juicing bag of FIG. 5 placed on a hanging rack between a propulsion plate and a front fixed plate of a juicer, according to a preferred embodiment of the invention.
FIG. 6B shows a top view of the hanging rack in FIG. 6A, according to a preferred embodiment of the invention.
FIG. 7 shows amplification of force by the connecting rods of the moving parts, according to a preferred embodiment of the invention.
FIGS. 8A-B shows propulsion distance of the propulsion plate, according to a preferred embodiment of the invention.

In the drawings: 1. frame; 11. front fixed plate; 12. rear fixed plate; 13. left side plate; 14. right side plate; 15. hinge hole; 16. bump; 2. actuator; 211. first stationary part; 212. second stationary part; 221. first moving part; 222. second moving part; 223. third moving part; 224. fourth moving part; 23. driving threaded rod; 241. first action block; 242. second action block; 25. driver; 26. transmission; 27. bearing block; 28. short shaft pin; 29. long shaft pin; 3. propulsion plate; 4. juicing bag; 40. gasket; 50. clamping ring.

### DETAILED DESCRIPTION OF EMBODIMENTS

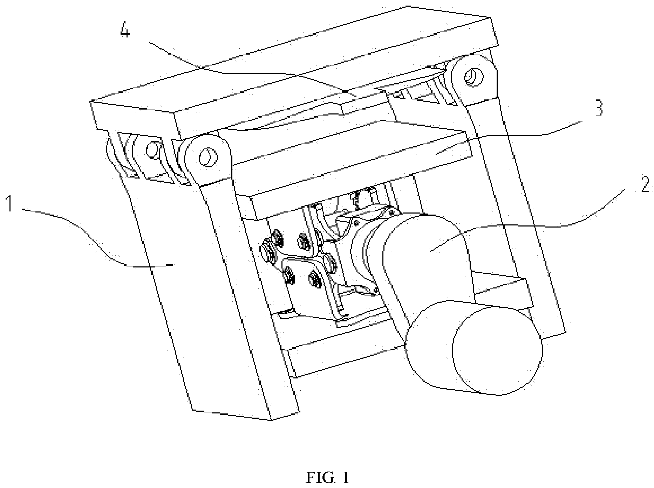

In order to make it easy to understand the implementing technical means, creative features and achieved objects and effects of the present invention, the technical solutions provided by the present invention are described in detail with the following embodiments in conjunction with FIGS. 1-4. However, the following contents are not intended to be a limit to the present invention.

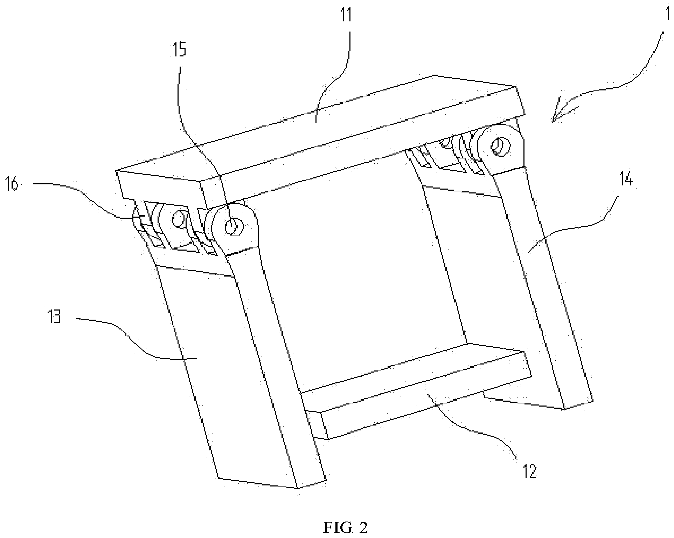

FIG. 1 is a structural diagram of a juicer, according to an embodiment of the invention. FIG. 2 is a structural diagram of a frame, according to a preferred embodiment of the invention. As shown in FIGS. 1 and 2, the juicer comprises: a frame 1, an actuator 2, and a propulsion plate 3. The frame 1 comprises a front fixed plate 11, a rear fixed plate 12, a left side plate 13, a right side plate 14, bumps 16, and hinge holes 15.

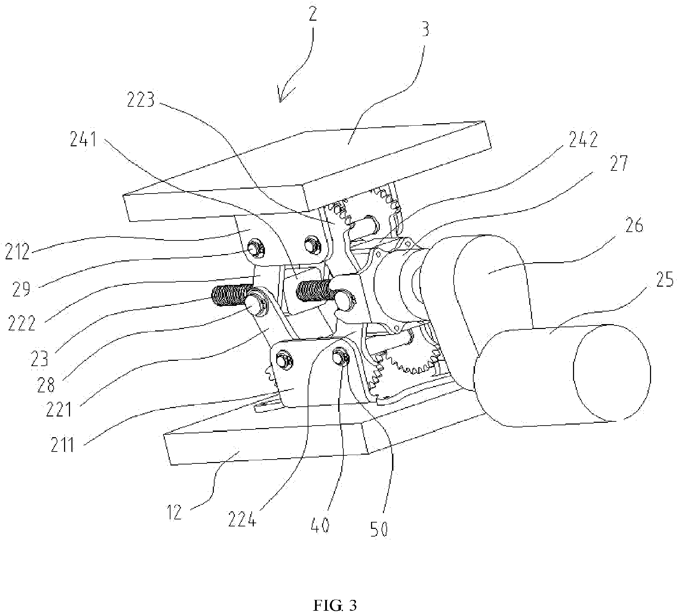

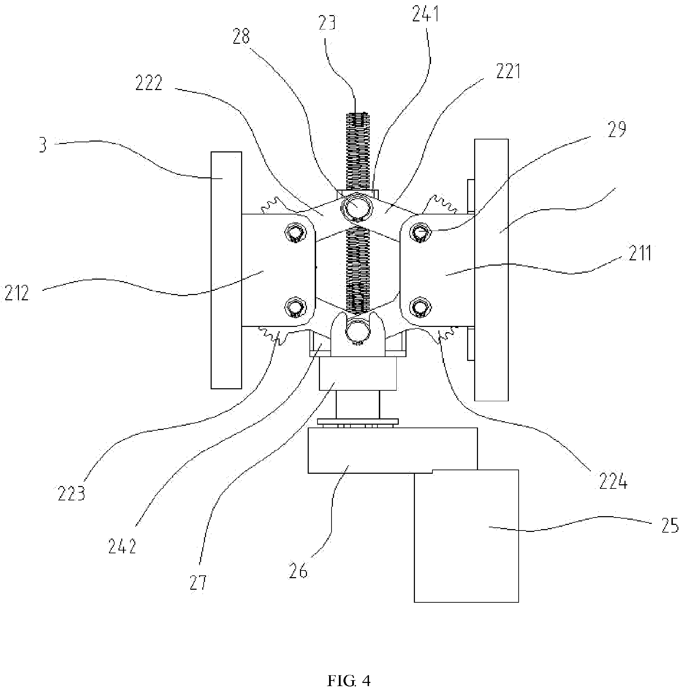

FIG. 3 is a structural diagram of an actuator, according to a preferred embodiment of the invention. FIG. 4 is another structural diagram of the actuator, according to a preferred embodiment of the invention. As shown in FIGS. 1, 3, and 4, the actuator 2 of the juicer comprises: a first stationary part 211, a first moving part 221, a fourth moving part 224, a long shaft pin 29, a first action block 241, a second action block 242, a short shaft pin 28, a driving threaded rod 23, a second moving part 222, a third moving part 223, a bearing block 27, a transmission 26, a driver 25, a second stationary part 212, a gasket 40, and a clamping ring 50.

Specifically, the frame 1 is hollow and is detachably formed by four plates, i.e., the front fixed plate 11, the rear fixed plate 12, the left side plate 13 and the right side plate 14. The left side plate 13 and the right side plate 14 of the frame 1 are both vertically arranged with a gap between them. One end of the left side plate 13 is provided with a hinge hole 15 and the same end of the right side plate 14 is also provided with a hinge hole 15. The front fixed plate 11 is arranged at the end of the left side plate 13 and of the right side plate 14 where the hinge holes 15 are arranged. The rear fixed plate 12 is arranged at the end of the left side plate 13 and of the right side plate 14 that is distant from the hinge holes 15. The rear fixed plate 12 curves towards the front fixed plate 11. Several symmetrically arranged bumps 16 are fixedly provided on a large plane of the front fixed plate 11 that is close to the end of the left side plate 13 and of the right side plate 14 where the hinge holes 15 are arranged. The bumps 16 have fixing holes (not shown) matching the hinge holes 15 in the left side plate 13 and the right side plate 14. The front fixed plate 11 is hinged to the left side plate 13 and the right side plate 14 via shaft pins (not shown).

The large plane of the rear fixed plate 12 that is close to the front fixed plate 11 is a mounting surface. The large plane of the front fixed plate 11 on which the bumps 16 are provided is a fixed surface.

On the mounting surface, the actuator 2 is arranged in the direction from the rear fixed plate 12 to the front fixed plate 11. The propulsion plate 3 is arranged on one side of the actuator 2 facing away from the rear fixed plate 12. The actuator 2 serves as a moving component of the device, and rises and descends linearly in a reciprocating manner between the rear fixed plate 12 and the front fixed plate 11.

More specifically, the actuator 2 comprises stationary parts, moving parts, a driving rod, action blocks, shaft pins, a driver 25, a bearing block 27, a transmission 26, a gasket 40, and a clamping ring 50. The stationary parts include a first stationary part 211 and a second stationary part 212 which are both arranged to have a U shape. The first stationary part 211 is detachably attached on the mounting surface of the rear fixed plate 12. The opening of the U shape of the first stationary part 211 is arranged to face the front fixed plate 11. The second stationary part 212 is fixedly attached on the side of the propulsion plate 3 that is close to the rear fixed plate 12. The opening direction of the U shape of the second stationary part 212 is arranged to face the opening direction of the U shape of the first stationary part 211.

Both side surfaces of the U-shaped opening of the first stationary part 211 and of the second stationary part 212 are symmetrically provided with moving parts including the first moving parts 221, the second moving parts 222, the third moving parts 223, and the fourth moving parts 224. All these moving parts are arranged in pairs and have the same overall shape. One of each pair of the first moving parts 221 and one of each pair of the fourth moving parts 224 are hinged to one side of the U shape of the first stationary part 211 via a long shaft pin 29 and are symmetrically arranged. One of each pair of the first moving parts 221 and one of each pair of the fourth moving parts 224 are hinged to the other side of the U shape of the first stationary part 211 via a long shaft pin 29. And each long shaft pin 29 passes through the corresponding pair of moving parts. One of each pair of the second moving parts 222 and one of each pair of the third moving parts 223 are hinged to one side of the U shape of the second stationary part 212 via a long shaft pin 29 and are symmetrically arranged. One of each pair of the second moving parts 222 and one of each pair of the third moving parts 223 are hinged to the other side of the U shape of the second stationary part 212 via a long shaft pin 29. And each long shaft pin 29 passes through the corresponding pair of moving parts.

One end of each moving part has a connecting hole (not shown) and the other end of each moving part has a fan-shaped gear structure. A same area of the end of each moving part that is close to its gear structure has a rotating hole (not shown). The moving parts are hinged to the stationary parts by means of the rotating holes (not shown) and the long shaft pins 29.

The connecting hole of each first moving part 221 is hinged, via a short shaft pin 28,with the connecting hole of each second moving part 222 located on the same side of the U shape of the stationary part as the first moving part 221. The connecting hole of each third moving part 223 is hinged with the connecting hole of each fourth moving part 224 that is located on the same side of the U shape of the stationary part as the third moving part 223. The fan-shaped gear structure of each first moving part 221 meshes with the fan-shaped gear structure of each fourth moving part 224 that is located on the same side of the U shape of the stationary part as the first moving part 221. The fan-shaped gear structure of each second moving part 222 meshes the fan-shaped gear structure of each third moving part 223 that is located on the same side of the U shape of the stationary part as the second moving part 222.

There is an action block between the hinged parts of each pair of the moving parts. The action blocks include the first action block 241 and the second action block 242. The first action block 241 is between the hinged parts of two first moving parts 221 and two second moving parts 222. The first action block 241 is hinged with each pair of the first moving parts 221 or each pair of the second moving parts 222 via a short shaft pin 28. A threaded hole (not shown) is provided in the first action block 241 in the direction parallel to the rear fixed plate 12 and perpendicular to the axis of the short shaft pin 28. The second action block 242 is between the hinged parts of two third moving parts 223 and two fourth moving parts 224. The first action block 241 is hinged with each pair of the first moving parts 221 or each pair of the second moving parts 222 via a short shaft pin 28. A through hole (not shown) is provided in the second action block 242 in the axial direction of the threaded hole (not shown) in the first action block 241, that is, the threaded hole (not shown) in the first action block 241 is coaxial with the through hole (not shown) in the second action block 242.

The driving rod is a driving threaded rod 23. The driving threaded rod 23 passes through the threaded hole (not shown) in the first action block 241 and the through hole (not shown) in the second action block 242. One end of the driving threaded rod 23 passes through the through hole (not shown) in the second action block 242 and is connected with the bearing block 27. The bearing block 27 is detachably attached on the second action block 242 and is further hinged to each pair of the third moving parts 223 and each pair of the fourth moving parts 224 via a short shaft pin 28. The bearing block 27 includes several bearings (not shown). The use of the structure of a threaded rod and action blocks enables high repeatability, so that the working time is prolonged.

A transmission 26 is provided on one side of the bearing block 27 facing away from the second action block 242. And a driver 25 is provided on one side of the transmission 26 facing away from the bearing block 27.

Specifically, a juicing bag 4 is arranged between the propulsion plate 3 and the fixed surface of the front fixed plate 11 of the frame 1. The juicing bag 4 is used to contain food, in order to prevent juice from sputtering onto components of the juicer during squeezing. Accordingly, the juicer requires no cleaning.

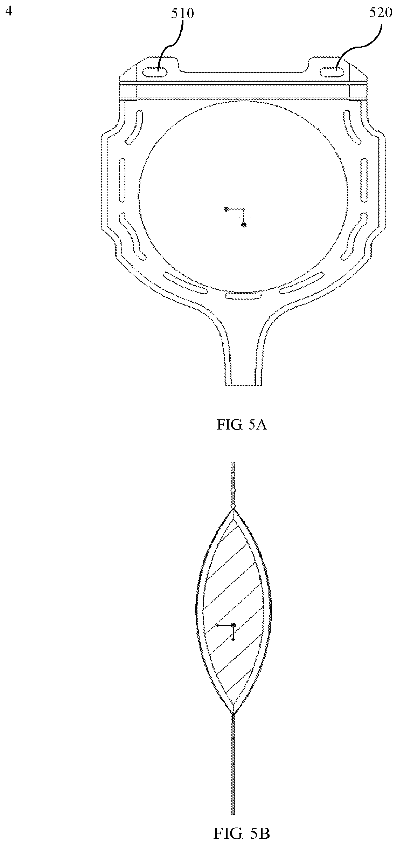

In one embodiment, the juicing bag 4 is pre-sealed to prevent leakage during the squeezing process. FIG. 5A shows a front view of a juicing bag 4, according to a preferred embodiment of the invention. FIG. 5B shows a side cross-sectional view of the juicing bag 4 of FIG. 5A, according to a preferred embodiment of the invention. As shown in FIGS. 5A-B, a top section and sides of the juicing bag 4 are sealed during squeezing, but the bottom of the juicing bag 4 is not permanently sealed so that juice can come out from the juicing bag 4. The juicing bag 4 includes two hang holes 510 and 520 in the top section. A user may hang the juicing bag 4 on a juicer by using the two hang holes 510 and 520. Examples of juicing bags are further described in PCT Patent Appl. No. PCT/CN2017/093762.

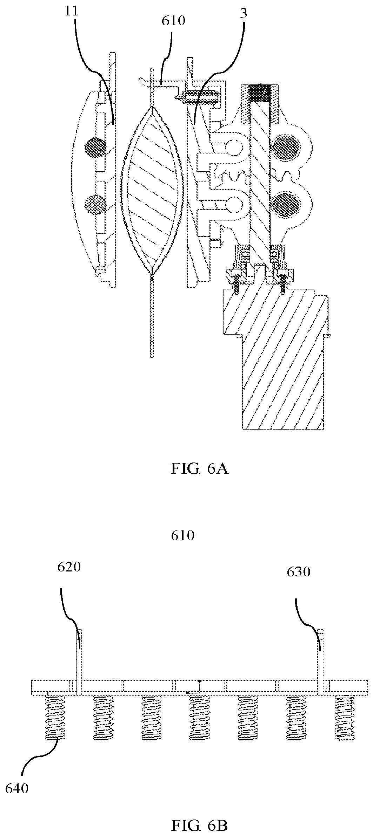

FIG. 6A shows the juicing bag 4 of FIG. 5 placed on a hanging rack 610 between a propulsion plate 3 and a front fixed plate 11 of a juicer, according to a preferred embodiment of the invention. As shown in FIG. 6A, the juicer includes a hanging rack 610 on which the juicing bag 4 is hung. FIG. 6B shows a top view of the hanging rank 610 of the juicer of FIG. 6A, according to a preferred embodiment of the invention. As shown in FIG. 6B, the hanger 610 including two hang bars 620 and 630. The two hang bars 620 and 630 can go through the hang holes 510 and 520 (not shown in FIG. 6B) of the juicing bag 4, respectively. Also, the hanging rack 610 includes one or more springs 640. In one embodiments, the springs 640 are compression springs that are designed to operate with a compression load, so the spring becomes shorter when a compression load is applied. During squeezing process, the springs 640 can be compressed.

When a user puts food into the juicing bag 4 and places the juicing bag 4 between the propulsion plate 3 and the front fixed plate 11 of the frame 1, the user may start the driver 25. The driver 25, through the transmission 26 and the bearing block 27, drives the driving threaded rod 23 to rotate. Since one end of the driving threaded rod 23 is connected to the bearing block 27, the rotation of the driving threated rod 23 drives the first action block 241 to reciprocate in the axial direction of the driving threaded rod 23. As the symmetrically arranged moving parts are hinged to the moving blocks via the short shaft pins 28, when the first action block 241 moves towards the second action block 242, the included angle between the first moving part 221 and the second moving part 222 and the included angle between the third moving part 223 and the fourth moving part 224 get closer to 180°. Consequently, the distance between the first stationary part 211 and the second stationary part 212 is longer, and the distance between the propulsion plate 3 and the front fixed plate 11 of the frame 1 is shorter. Thus, the food in the juicing bag 4 is squeezed to produce juice.

The propulsion plate 3 and the front fixed plate 11 preferably has an area of at least 200 cm², and more preferably 300-400 cm², for exerting pressure on food in a preferred model designed for home (consumer) use. Other consumer designs preferably have areas of less than 1000 cm², or more preferably less than 700 cm² or 500 cm², which will limit the overall size and bulkiness of the appliance for consumer use. For industrial applications, the area between the propulsion plate 3 and the front fixed plate 11 preferably is larger in order to produce more juice. Industrial juicers preferably produce at least 1 liter juice for moderately juicy food. Industrial juicers can have areas of 1000-2000 cm², or more preferably 1500-2000 cm², and possibly as large as 2500 cm².

When the first action block 241 moves away from the second action block 242, the included angle between the first moving part 221 and the second moving part 222 and the included angle between the third moving part 223 and the fourth moving part 224 get closer to 0°. Consequently, the distance between the first stationary part 211 and the second stationary part 212 is shorter and further the distance between the propulsion plate 3 and the front fixed plate 11 of the frame 1 is longer. Thus, it is convenient to take out the juicing bag 4 and the juice. Since each of the moving parts has a fan-shaped gear structure and the gear structures of two symmetrical moving parts meshes with each other, when the first action block 241 moves towards or away from the second action block 242, the second action block 242 also moves towards or away from the first action block 241 at the same speed. It ensures that when the second stationary part 212 rises or descends linearly in a reciprocating manner, the second stationary part 212 stays horizontal along with the first stationary part 211. So that the squeezing process is more stable, the food is more uniformly squeezed, and more juice is produced.

In one embodiment, the driver 25 generates a torque force and drives the driving threaded rod 23 to rotate. Because the driving rod 23 is threaded, a force is generated. The generated force is exerted on the connecting rods of the moving parts and can be amplified by the connecting rods of the moving parts to generate a propelling force. The propelling force is exerted on the stationary part 212 associated with the propulsion plate 3 and propels the propulsion plate 3 to move towards or away from the front fixed plate 11.

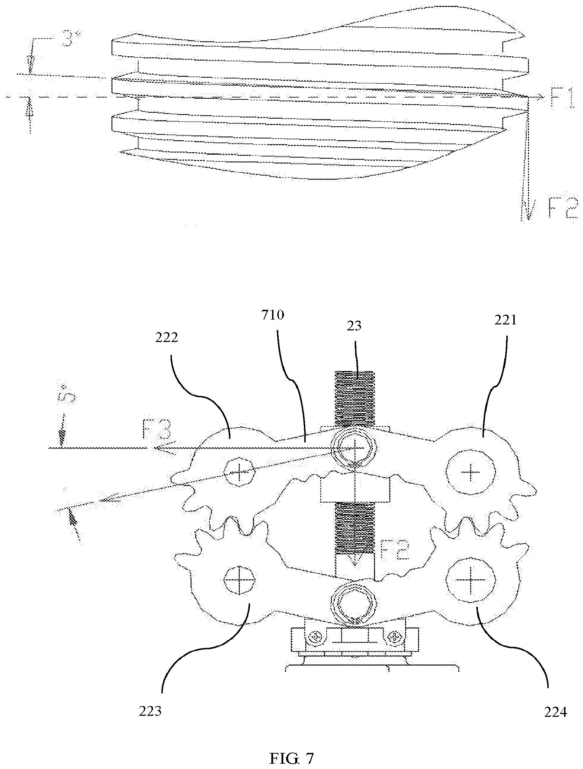

FIG. 7 shows amplification of force by the connecting rods of the moving parts, according to a preferred embodiment of the invention. As shown in FIG. 7, the driver 25 provides a torque force F1. The torque force F1 exerted on the driving threaded rod 23 is transferred into a force F2. In the embodiment of FIG. 7, the thread angle of the driving threaded rod 23 is 3°. Accordingly, the angle between the torque force F1 and the force F2 is 3º. Thus, the force F2 equals to the torque force F1 divided by tan(3º). Assuming the torque force F1 provided by the driver 25 is between 20 kgf and 90 kgf, the force F2 is between approximately 400 kgf and 1700 kgf. In other embodiments, the torque force F1 can have other values. Also, the thread angle of the driving threaded rod 23 can be larger or smaller than 3º.

The force F2 is exerted on the connecting rods of the moving parts. At one extreme of the pressing movement, the included angle between the first moving part 221 and the second moving part 222 is close to 180º. The connecting rods of the moving parts amplify the force F2, resulting in a propelling force F3 that is greater than the force F2. In FIG. 7, the propelling force F3 has a horizontal direction. Taken the second moving part 222 for example, the second moving part 222 has a connecting rod 710. The angle between the connecting rod 710 and the propelling force F3 is 5º. Accordingly, the propelling force F3 equals to the force F2 divided by tan(5º). As the force F2 is between approximately 400 kgf to 1700 kgf, the propelling force is between approximately 4300 kgf to 19,000 kgf. The preferred design for consumer use produces a propelling force of 6-8 tons, and that design can be modified to generate propelling forces of 10 tons or more, which is significantly higher than comparable juicers based on other mechanical designs.

Travel of the propulsion plate 3 under these large forces can produce up to 95% juice by weight, for example in some trials with watermelon and pomegranate. Table 1 below lists various foods and more typical amounts of juice extracted in experiments:

**Table 1: Juice extracted from various foods**

| Food | % juice (by weight) |
|---|---|
| Dragon fruit | 84% |
| Watermelon | 80% |
| Pear | 76% |
| Pineapple | 75% |
| Peach | 71% |
| Sugar Cane | 58% |
| Ginger | 56% |
| Kale | 43% |
| Frozen Banana | 40% |
| Kiwi | 38% |
| Cauliflower | 28% |

The large propelling force is because the driving threaded rod 23 significantly amplifies the torque force F1 provide by the driver 25. In the embodiment of FIG. 7, the actuator 2 increases the torque force of the driver by a factor of approximately 200-250 in the current preferred consumer design, although increases of 500 or even 1000 can be possible in alternate designs.

The angle between the connecting rod 710 and the propelling force F3 changes as the second moving part 222 moves. But when the angle is below 45º, the propelling force F3 is greater than the force F2.

The propulsion plate 3, driven by the propelling force, can travel for a long distance ("propulsion distance"). In the current preferred consumer design, the distance between the propulsion plate 3 and the front fixed plate 11 can be up to 70 mm to allow insertion of food, including whole fruits. In most cases, the propelling force presses food from an initial thickness of 70 mm to a final thickness of 5 mm or less, and more preferably less than 2 mm or even less than 1 mm. In industrial designs, the initial gap between the propulsion plate 3 and the front fixed plate 11 can be much larger to allow more front, for example up to 500 mm or more.

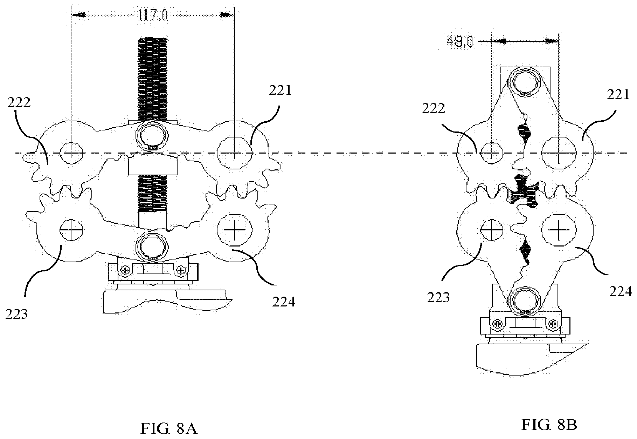

FIGS. 8A-B shows propulsion distance of the propulsion plate 3, according to a preferred embodiment of the invention. For clarity, the propulsion plate 3 is not shown in FIGS. 8A-B. FIGS. 8A-B shows two different positions of the moving parts, which correspond to two different positions of the propulsion plate 3. As the inclusive angle between the first moving part 221 and the second moving part 222 (or the included angle between the third moving part 223 and the fourth moving part 224) approaches 180°, a horizontal distance between the centers of the gear structures of each pair of the moving parts increases and the propulsion plate 3 moves closer to the front fixed plate 11. Similarly, as the inclusive angle between the first moving part 221 and the second moving part 222 (or the included angle between the third moving part 223 and the fourth moving part 224) approaches 0°, a horizontal distance between the centers of the gear structures of each pair of the moving parts decreases and the propulsion plate 3 moves away from the front fixed plate 11. Thus, FIG. 8A corresponds to a situation when the propulsion plate 3 and the front fixed plate 11 are close to each other and FIG. 8B corresponds to when they are farther apart.

As shown in FIG. 8A, the horizontal distance between the centers of the fan shaped gears of the first moving part 221 and the second moving part 222 is 117 mm. In FIG. 8B, the horizontal distance between the centers of the fan shaped gears of the first moving part 221 and the second moving part 222 is 48 mm. Because the propulsion plate 3 is associated with the stationary part 212 that is hinged on the second and third moving parts 222 and 223, the propulsion plate 3 travels up to 117 - 48 = 69 mm.

As a preferred embodiment, the first stationary part 211 is detachably arranged on the rear fixed plate 12 via a threaded fastener (not shown), which facilitates later maintenance and repair.

As a preferred embodiment, each of the shaft pins is associated with a gasket 40 and a clamping ring 50, which not only make the hinge joint firmer but also facilitates disassembly, thereby facilitating later maintenance and repair work.

As a preferred embodiment, the driver 25 includes a motor, which is convenient to control and quick to start. And using the transmission 26 can increase lifting force, accelerate the action, and improve the juicing efficiency while increasing juice extraction rate.

The juicer provided in this embodiment comprises a frame 1, an actuator 2 and a juicing bag 4, which is reasonable in structural design and compact in layout. The driver 25 on the actuator 2 drives the driving threaded rod 23 to rotate. The rotation of the driving threaded rod 23 drives the first action block 241 and the second action block 242 to move towards or away from each other, causing the second stationary part 212 to move away from or close to the first stationary part 211, further pushing the propulsion plate 3 to move towards or away from the front fixed plate 11 of the frame 1 to squeeze food put in the juicing bag 4 between the propulsion plate 3 and the front fixed plate 11, thereby achieving the juicing object. As a squeezing structure is adopted, noise during juicing is small and experience effect is better. Moreover, as the structure of the threaded rod and the action blocks is adopted, repeatability is high and working time is longer. The driver 25 includes the motor, which is convenient to control and can be quickly started. Using the transmission 26 increases lifting force, accelerates the action, and improves juicing efficiency, and at the same time increases juice extraction rate. Using the juicing bag 4 to contain food prevents juice from sputtering onto components during squeezing, and therefore, no cleaning is required.

The above descriptions are only preferred embodiments of the invention, which are not intended to limit the embodiments and protection scope of the invention. For a technical person skilled in the art, it should be appreciated that all the solutions obtained by equivalent substitutions and obvious variations made by using the contents of the description and the drawings of the present invention should be covered by the protection scope of the present invention.

## Claims

1. A juicer comprising:
a hollow frame (1) comprising a front fixed plate (11) and a rear fixed plate (12), the rear fixed plate having a mounting surface facing the front fixed plate;
an actuator (2) having a rear side mounted to the mounting surface of the rear fixed plate and a front side facing the front fixed plate;
a propulsion plate (3) arranged on the front side of the actuator facing the front fixed plate, the propulsion plate and the front fixed plate forming a cavity for receiving a juicing bag (4); and
a hanging rack (610) for hanging the juicing bag vertically between the propulsion plate and the front fixed plate;
wherein the actuator comprises moving parts (221-224), a driving rod (23), and action blocks (241-242); the moving parts are symmetrically arranged; the driving rod and the action blocks are arranged between the symmetrically arranged moving parts; rotation of the driving rod causes the propulsion plate to reciprocate linearly between the mounting surface and the front fixed plate; and travel of the propulsion plate towards the front fixed plate exerts pressure on food contained in the juicing bag.

2. The juicer of claim 1, wherein a distance between the propulsion plate and the front fixed plate is at least 60 mm when open or at least 100 mm when open.

3. The juicer of claim 1 or claim 2, wherein the propulsion plate is configured to press food to a thickness of not more than 5 mm or not more than 2 mm.

4. The juicer of any preceding claim, wherein the propulsion plate and the front fixed plate have an area of at least 200 cm² or at least 1000 cm² for exerting pressure on food.

5. The juicer of any preceding claim, wherein the propulsion plate is configured to produce at least 80% juice by weight for watermelon and/or at least 70% juice by weight for pear, pineapple and peach.

6. The juicer of any preceding claim, wherein the propulsion plate is configured to exert pressure of at least 6 tons.

7. The juicer of any preceding claim, wherein the actuator further comprises stationary parts (211, 212) attached to the propulsion plate and to the mounting surface, one end of each of the moving parts is hinged to one of the stationary parts and the other end of each of the moving parts is hinged to one of the action blocks, and the driving rod passes through the action blocks.

8. The juicer of claim 7, wherein the stationary parts have a U shape, and on both side edges thereof are symmetrically provided two moving parts.

9. The juicer of claim 7 or claim 8, wherein the driving rod is a threaded rod, and one of the action blocks (241) is provided with a threaded hole matched with the driving rod.

10. The juicer of claim 9, wherein another of the action blocks (242) is provided with a bearing block (27) and the bearing block is hinged to the moving part while being fixed to the action block.

11. The juicer of any of claims 7 to 10, wherein the end of the moving parts connected to the stationary part is provided with a gear structure, the gear structure is arranged to have a fan shape, and the gear structures of the two symmetrically arranged moving parts on the same side of the same stationary part are engaged with each other.

12. The juicer of claim 11, wherein the stationary part (211) of the actuator attached to the mounting surface is detachably attached to the mounting surface.

13. The juicer of claim 11 or claim 12, wherein the moving parts are hinged to the stationary parts by long shaft pins (29) and are hinged to the action blocks by short shaft pins (28).

14. The juicer of any preceding claim, further comprising a motor that drives the driving rod.

15. The juicer of any preceding claim, wherein the hanging rack comprises one or more springs (640) configured to allow movement of the hanging rack during travel of the propulsion plate.

## Patentansprüche

1. Entsafter, Folgendes umfassend:
einen Hohlrahmen (1), der eine fixierte Frontplatte (11) und eine fixierte Rückplatte (12) umfasst, wobei die fixierte Rückplatte eine der fixierten Vorderplatte zugewandte Montagefläche aufweist;
ein Stellglied (2) mit einer an der Montagefläche der fixierten Rückplatte befestigten Rückseite und einer der fixierten Vorderplatte zugewandten Vorderseite;
eine auf der Vorderseite des Stellglieds angeordnete Antriebsplatte (3), die der fixierten Vorderplatte zugewandt ist, wobei die Antriebsplatte und die fixierte Vorderplatte einen Hohlraum zur Aufnahme eines Entsaftungsbeutels (4) bilden; und
ein Hängegestell (610) zum vertikalen Aufhängen des Entsaftungsbeutels zwischen der Antriebsplatte und der vorderen fixierten Platte;
wobei das Stellglied bewegliche Teile (221-224), eine Antriebsstange (23) und Aktionsblöcke (241-242) umfasst; die beweglichen Teile symmetrisch angeordnet sind; die Antriebsstange und die Aktionsblöcke zwischen den symmetrisch angeordneten beweglichen Teilen angeordnet sind; die Drehung der Antriebsstange bewirkt, dass sich die Antriebsplatte linear zwischen der Montagefläche und der fixierten Vorderplatte hin und her bewegt; und die Bewegung der Antriebsplatte in Richtung der fixierten Vorderplatte Druck auf Lebensmittel ausübt, die in dem Entsaftungsbeutel enthalten sind.

2. Entsafter nach Anspruch 1, wobei ein Abstand zwischen der Antriebsplatte und der fixierten Vorderplatte im geöffneten Zustand mindestens 60 mm oder im geöffneten Zustand mindestens 100 mm beträgt.

3. Entsafter nach Anspruch 1 oder Anspruch 2, wobei die Antriebsplatte konfiguriert ist, um Lebensmittel auf eine Dicke von nicht mehr als 5 mm oder nicht mehr als 2 mm zu pressen.

4. Entsafter nach einem vorhergehenden Anspruch, wobei die Antriebsplatte und die fixierte Vorderplatte eine Fläche von mindestens 200 cm2 oder mindestens 1000 cm2 zum Ausüben von Druck auf Lebensmittel aufweisen.

5. Entsafter nach einem vorhergehenden Anspruch, wobei die Antriebsplatte konfiguriert ist, um mindestens 80 Gew.-% Saft für Wassermelone und/oder mindestens 70 Gew.-% Saft für Birne, Ananas und Pfirsich herzustellen.

6. Entsafter nach einem vorhergehenden Anspruch, wobei die Antriebsplatte konfiguriert ist, um einen Druck von mindestens 6 Tonnen auszuüben.

7. Entsafter nach einem vorhergehenden Anspruch, wobei das Stellglied ferner feststehende Teile (211, 212) umfasst, die an der Antriebsplatte und an der Montagefläche befestigt sind, wobei je ein Ende der beweglichen Teile an einem der feststehenden Teile und das andere Ende jedes der beweglichen Teile an einem der Aktionsblöcke angelenkt ist, und die Antriebsstange durch die Aktionsblöcke hindurchgeht.

8. Entsafter nach Anspruch 7, wobei die feststehenden Teile eine U-Form aufweisen und an beiden Seitenkanten symmetrisch zwei bewegliche Teile bereitgestellt sind.

9. Entsafter nach Anspruch 7 oder Anspruch 8, wobei die Antriebsstange eine Gewindestange ist und einer der Aktionsblöcke (241) mit einem der Antriebsstange angepassten Gewindeloch bereitgestellt ist.

10. Entsafter nach Anspruch 9, wobei ein weiterer der Aktionsblöcke (242) mit einem Lagerblock (27) bereitgestellt ist und der Lagerblock am beweglichen Teil angelenkt ist, während er am Aktionsblock fixiert ist.

11. Entsafter nach einem der Ansprüche 7 bis 10, wobei das Ende der mit dem feststehenden Teil verbundenen beweglichen Teile mit einer Zahnradstruktur bereitgestellt ist, die Zahnradstruktur so angeordnet ist, dass sie eine Fächerform aufweist, und die Zahnradstrukturen der beiden symmetrisch angeordneten beweglichen Teile auf der gleichen Seite des gleichen feststehenden Teils miteinander in Eingriff stehen.

12. Entsafter nach Anspruch 11, wobei der feststehende Teil (211) des an der Montagefläche befestigten Stellglieds lösbar an der Montagefläche befestigt ist.

13. Entsafter nach Anspruch 11 oder Anspruch 12, wobei die beweglichen Teile über lange Wellenstifte (29) an den feststehenden Teilen angelenkt sind und über kurze Wellenstifte (28) an den Aktionsblöcken angelenkt sind.

14. Entsafter nach einem vorhergehenden Anspruch, ferner umfassend einen Motor, der die Antriebsstange antreibt.

15. Entsafter nach einem vorhergehenden Anspruch, wobei das Hängegestell eine oder mehrere Federn (640) umfasst, die konfiguriert sind, um eine Bewegung des Hängegestells während des Verfahrens der Antriebsplatte zu ermöglichen.

## Revendications

1. Extracteur de jus comprenant :
un cadre creux (1) comprenant une plaque fixe avant (11) et une plaque fixe arrière (12), la plaque fixe arrière ayant une surface de montage faisant face à la plaque fixe avant ;
un actionneur (2) ayant un côté arrière monté sur la surface de montage de la plaque fixe arrière ;
une plaque de propulsion (3) agencée sur le côté avant de l'actionneur faisant face à la plaque fixe avant, la plaque de propulsion et la plaque fixe avant formant une cavité destinée à recevoir une poche d'extraction de jus (4) ; et
un support de suspension (610) pour suspendre la poche d'extraction de jus entre la plaque de propulsion et la plaque fixe avant ;
dans lequel l'actionneur comprend des parties mobiles (221-224), une tige d'entraînement (23) et des blocs d'action (241-242) ; les parties mobiles sont disposées symétriquement ; la tige d'entraînement et les blocs d'action sont disposés entre les parties mobiles agencées symétriquement ; une rotation de la tige d'entraînement amène la plaque de propulsion à se déplacer en va-et-vient de manière linéaire entre la surface de montage et la plaque fixe avant ; et un déplacement de la plaque de propulsion vers la plaque fixe avant exerce une pression sur un aliment contenu dans la poche d'extraction de jus.

2. Extracteur de jus selon la revendication 1, dans lequel une distance entre la plaque de propulsion et la plaque fixe avant est d'au moins 60 mm en position ouverte ou d'au moins 100 mm en position ouverte.

3. Extracteur de jus selon la revendication 1 ou la revendication 2, dans lequel la plaque de propulsion est configurée pour presser un aliment jusqu'à une épaisseur d'au plus 5 mm ou d'au plus 2 mm.

4. Extracteur de jus selon l'une quelconque des revendications précédentes, dans lequel la plaque de propulsion et la plaque fixe avant ont une surface d'au moins 200 cm2 ou d'au moins 1 000 cm² pour exercer une pression sur un aliment.

5. Extracteur de jus selon l'une quelconque des revendications précédentes, dans lequel la plaque de propulsion est configurée pour produire au moins 80 % en poids de jus pour de la pastèque et/ou au moins 70 % en poids de jus pour de la poire, de l'ananas et de la pêche.

6. Extracteur de jus selon l'une quelconque des revendications précédentes, dans lequel la plaque de propulsion est configurée pour exercer une pression d'au moins 6 tonnes.

7. Extracteur de jus selon l'une quelconque des revendications précédentes, dans lequel l'actionneur comprend en outre des parties fixes (211, 212) fixées à la plaque de propulsion et à la surface de montage, une extrémité de chacune des parties mobiles est articulée sur l'une des parties fixes et l'autre extrémité de chacune des parties mobiles est articulée sur l'un des blocs d'action, et la tige d'entraînement passe à travers les blocs d'action.

8. Extracteur de jus selon la revendication 7, dans lequel les parties fixes ont une forme en U, et sur leurs deux bords latéraux sont prévues de manière symétrique deux parties mobiles.

9. Extracteur de jus selon la revendication 7 ou la revendication 8, dans lequel la tige d'entraînement est une tige filetée, et l'un des blocs d'action (241) est pourvu d'un trou fileté apparié à la tige d'entraînement.

10. Extracteur de jus selon la revendication 9, dans lequel un autre des blocs d'action (242) est pourvu d'un bloc de support (27) et le bloc de support est articulé sur la partie mobile tout en étant fixé au bloc d'action.

11. Extracteur de jus selon l'une quelconque des revendications 7 à 10, dans lequel l'extrémité des parties mobiles reliée à la partie fixe est munie d'une structure d'engrenage, la structure d'engrenage est agencée pour avoir une forme d'éventail, et les structures d'engrenage des deux parties mobiles agencées symétriquement sur le même côté de la même partie fixe sont en prise l'une avec l'autre.

12. Extracteur de jus selon la revendication 11, dans lequel la partie fixe (211) de l'actionneur fixée à la surface de montage est fixée de manière amovible sur la surface de montage.

13. Extracteur de jus selon la revendication 11 ou la revendication 12, dans lequel les parties mobiles sont articulées sur les parties fixes par des broches d'arbre longues (29) et sont articulées sur les blocs d'action par des broches d'arbre courtes (28).

14. Extracteur de jus selon l'une quelconque des revendications précédentes, comprenant en outre un moteur qui entraîne la tige d'entraînement.

15. Extracteur de jus selon l'une quelconque des revendications précédentes, dans lequel le support de suspension comprend un ou plusieurs ressorts (640) configurés pour permettre un déplacement du support de suspension pendant un déplacement de la plaque de propulsion.
